(19) **Europäisches Patentamt European Patent Office Office européen des brevets**

(11) **EP 3 532 195 B1**

(12) **EUROPEAN PATENT SPECIFICATION**

(45) Date of publication and mention
of the grant of the patent:
**14.02.2024 Bulletin 2024/07**

(21) Application number: **17783522.0**

(22) Date of filing: **16.10.2017**

(51) International Patent Classification (IPC):
**B01J 20/26** *(2006.01)* **B01J 20/28** *(2006.01)*
**B65G 65/30** *(2006.01)*

(52) Cooperative Patent Classification (CPC):
**B01J 20/28011; B01J 20/267; B65G 65/30;**
B01J 2220/68

(86) International application number:
**PCT/EP2017/076291**

(87) International publication number:
**WO 2018/077639 (03.05.2018 Gazette 2018/18)**

(54) **METHOD FOR DISCHARGING SUPERABSORBENT PARTICLES FROM A SILO AND FILLING THEM INTO BULK CONTAINERS**

VERFAHREN ZUM ENTLADEN VON SUPERABSORBIERENDEN PARTIKELN AUS EINEM SILO UND ZUM FÜLLEN DERSELBEN IN SCHÜTTGUTBEHÄLTER

PROCÉDÉ D'ÉVACUATION DE PARTICULES SUPERABSORBANTES D'UN SILO ET LEUR REMPLISSAGE DANS DES CONTENEURS EN VRAC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2016 EP 16195643**

(43) Date of publication of application:
**04.09.2019 Bulletin 2019/36**

(73) Proprietor: **BASF SE**
**67056 Ludwigshafen am Rhein (DE)**

(72) Inventors:
• **HERMELING, Dieter**
**67056 Ludwigshafen (DE)**
• **FUNK, Ruediger**
**67056 Ludwigshafen (DE)**
• **WEISMANTEL, Matthias**
**67056 Ludwigshafen (DE)**
• **PETERSON, Monte Alan**
**Freeport, TX 77541 (US)**
• **LEUNIS, Peter**
**2040 Antwerpen (BE)**
• **POSSEMIERS, Karl**
**2040 Antwerpen (BE)**

(74) Representative: **BASF IP Association**
**BASF SE**
**G-FLP-C006**
**67056 Ludwigshafen (DE)**

(56) References cited:
**EP-A1- 2 253 563** **EP-A2- 1 118 633**
**WO-A1-2005/077786** **WO-A1-2014/032949**

• **Niklas Engblom: "Segregation of powder mixtures in silos with particular reference to dry mineral-based construction materials", , 20 April 2012 (2012-04-20), pages 1-109, XP055437484, Helsinki Retrieved from the Internet: URL:http://urn.fi/URN:NBN:fi-fe20131126741 4 [retrieved on 2017-12-21]**

**Description**

The invention relates to a filling process for superabsorbent polymer particles, comprising discharging the superabsorbent polymer particles out of a silo into bulk containers for shipping, wherein the filling level of the silo during filling of the bulk container is never less than 20%. Superabsorbent polymer particles are used to produce diapers, tampons, sanitary napkins and other hygiene articles, but also as water-retaining agents. The superabsorbent polymer particles are often also referred to as "absorbent resins", "superabsorbents", "water-absorbent polymers", "absorbent polymers", "absorbent gelling materials", "hydrophilic polymers" or "hydrogels".

The production of superabsorbent polymer particles is described in the monograph "Modern Superabsorbent Polymer Technology", F.L. Buchholz and A.T. Graham, Wiley-VCH, 1998, pages 71 to 103.

EP 1 118 633 A2 discloses a process for storing of superabsorbent polymer particles, wherein a surface getting contact with the stored superabsorbent polymer particles is heated.

EP 2 253 563 A1 discloses a process for production of superabsorbent polymer particles, wherein a hopper having a specified shape.

EP 2 263 939 A1 discloses a process for filling superabsorbent polymer particles into a container, comprising vibrating the container.

The thesis by N. Engblom "Segregation of powder mixtures in silos with particular reference to dry mineral-based construction materials", University of Helsinki, 2012, investigates segregation patterns of powder mixtures in silos.

It was an object of the present invention to provide an improved process for producing superabsorbent polymer particles without deviations in the particle size distribution of the finished product.

The object was achieved by a filling process for superabsorbent polymer particles, wherein superabsorbent polymer particles are discharged out of a silo into n bulk container, n is an integer, the sum of the filled volume of the n bulk container correspondents to more than 80% of the effective volume of the silo and the filling level of the silo during filling of the n bulk container is not less than 20%.

The filing level of the silo is the filled volume in the silo divided by the effective volume of the silo.

If the filled volumes of the bulk containers are constant, the integer n can be calculated by

$$n > \frac{0.8 \times (effective\ volume\ of\ the\ silo)}{(filled\ volume\ of\ the\ bulk\ container)}$$

If the filled volumes of the bulk containers are not constant, the following equation must be fulfilled:

$$\sum_{i=1}^{n} (filled\ volume\ of\ the\ bulk\ container)_i > 0.8 \times (effective\ volume\ of\ the\ silo)$$

The sum of the filled volumes of the n bulk containers must be higher than 80% of the effective volume of the silo, that means that the discharged volume must be more than 80% of the effective volume of the silo and the filling level of the silo must be at least 20% during the total time of filling of the n bulk containers.

A bulk container is a container that is suitable for shipping superabsorbent polymer particles to costumers. Suitable bulk container are big bags, bag-in-box systems or silo trucks.

A big bag is a standardized container in large dimensions for storing and transporting. Big bags are typically made of thick woven polyethylene or polypropylene. Its amount of superabsorbent polymer particles by weight in a big bag after filling is normally from about 1,000 kg to 1,200 kg. Big bags are also known as flexible intermediate bulk container (FIBC).

The effective volume of the silo is the maximum volume of the silo that can be used for storing of superabsorbent polymer particles. The filled volume of a bulk container is the effective amount of superabsorbent polymer particles in the filled bulk container by volume.

The present invention is based on the finding that there is a segregation of superabsorbent polymer particles having different particle sizes at low filling levels of the silo. That means that there is a negative impact on the particle size distribution of the bulk container that are filled for sale. Therefore, the filling level of the silo during filling of the n bulk container is preferably not less than 30%, more preferably not less than 40%, most preferably not less than 50%, wherein the sum of the filled volume of the n bulk container correspondents to preferably more than 85%, more preferably more than 90%, most preferably more than 95%, of the effective volume of the silo.

If the filled volumes of the bulk containers are constant, the preferred integer n can be calculated by

$$n > \frac{0.85 \times (effective\ volume\ of\ the\ silo)}{(filled\ volume\ of\ the\ bulk\ container)}$$

If the filled volumes of the bulk containers are constant, the more preferred integer n can be calculated by

$$n > \frac{0.9 \times (effective\ volume\ of\ the\ silo)}{(filled\ volume\ of\ the\ bulk\ container)}$$

If the filled volumes of the bulk containers are constant, the most preferred integer n can be calculated by

$$n > \frac{0.95 \times (effective\ volume\ of\ the\ silo)}{(filled\ volume\ of\ the\ bulk\ container)}$$

The cone angle of the silo is preferably smaller than 50° from the vertical, more preferably smaller than 40° from the vertical, most preferably smaller than 30° from the vertical.

The effective volume of the silo is preferably at least 100 m$^3$, more preferably at least 300 m$^3$, most preferably at least 500 m$^3$.

For example, having a silo of an effective volume of 60 m$^3$ and big bags of a filled volume of 1 m$^3$ each the sum of the filled volumes of 60 big bags correspondents to 100% of the effective volume of the silo, the sum of the filled volumes of 57 big bags correspondents to 95% of the effective volume of the silo, the sum of the filled volumes of 54 big bags correspondents to 90% of the effective volume of the silo, the sum of the filled volumes of 51 big bags correspondents to 85% of the effective volume of the silo, the sum of the filled volumes of 48 big bags correspondents to 80% of the effective volume of the silo.

According to our present invention the silo must be refilled before the filling level of the silo becomes lower than 20%, 30%, 40%, or 50%. The refilling of the silo can be done discontinuous or continuous.

For example, if 60 big bags of a filled volume of 1 m$^3$ each shall be filled out of a silo of an effective volume of 60 m$^3$ and a filling level of 100%, our present invention can be performed by filling 30 big bags (the filling level of the silo drops to 50%), refilling the silo (to a filling level of 100%) and filling the next 30 big bags.

Optionally, there is a small intermediate hopper between the silo and the bulk container filling station. Such set-up can be useful for connecting two or more silos to one bulk container filling station.

The temperature of the superabsorbent polymer particles inside the silo is preferably from 30 to 80°C, more preferably from 35 to 70°C, most preferably from 40 to 60°C. The moisture content of the superabsorbent polymer particles inside the silo is preferably from 0.1 to 15% by weight, more preferably from 0.3 to 10% by weight, most preferably from 0.5 to 5% by weight.

In a preferred embodiment of the present invention the silo is thermally insulated and/or external heated. The external heating (heat-tracing) can be done by heating of the outer surface of the silo using steam or electric energy. By thermal insulation and/or external heating any condensation of humidity at the inner wall of the silo shall be prevented.

In another preferred embodiment of the present invention, the silo is connected with a vent line. A vent line is any conduit or piping that connects the intermediate silos, storage silos and/or bulk container filing stations with the outer atmosphere. Typically, the vent lines comprise at least on filter (filter system) for removing superabsorbent polymer particles, especially superabsorbent polymer particles having a small particle size (dust). Preferably several vent lines are connected via one header with one filter system.

In another preferred embodiment the superabsorbent polymer particles in the silo and/or the bulk container are covered with dry air.

The production of the superabsorbent polymer particles is described in detail hereinafter:

The superabsorbent polymer particles may be produced by polymerizing a monomer solution or suspension, comprising

    a) at least one ethylenically unsaturated monomer which bears acid groups and may be at least partly neutralized,
    b) at least one crosslinker,
    c) at least one initiator,
    d) optionally one or more ethylenically unsaturated monomers copolymerizable with the monomers mentioned under a) and
    e) optionally one or more water-soluble polymers,

and are typically water-insoluble.

The monomers a) are preferably water-soluble, i.e. the solubility in water at 23°C is typically at least 1 g/100 g of water, preferably at least 5 g/100 g of water, more preferably at least 25 g/100 g of water and most preferably at least 35 g/100 g of water.

Suitable monomers a) are, for example, ethylenically unsaturated carboxylic acids, such as acrylic acid, methacrylic acid and itaconic acid. Particularly preferred monomers are acrylic acid and methacrylic acid. Very particular preference is given to acrylic acid.

Further suitable monomers a) are, for example, ethylenically unsaturated sulfonic acids, such as styrenesulfonic acid and 2-acrylamido-2-methylpropanesulfonic acid (AMPS).

Impurities can have a considerable influence on the polymerization. The raw materials used should therefore have a maximum purity. It is therefore often advantageous to specially purify the monomers a). Suitable purification processes are described, for example, in WO 2002/055469 A1, WO 2003/078378 A1 and WO 2004/035514 A1. A suitable monomer a) is, for example, acrylic acid purified according to WO 2004/035514 A1 and comprising 99.8460% by weight of acrylic acid, 0.0950% by weight of acetic acid, 0.0332% by weight of water, 0.0203% by weight of propionic acid, 0.0001 % by weight of furfurals, 0.0001 % by weight of maleic anhydride, 0.0003% by weight of diacrylic acid and 0.0050% by weight of hydroquinone monomethyl ether.

The proportion of acrylic acid and/or salts thereof in the total amount of monomers a) is preferably at least 50 mol%, more preferably at least 90 mol%, most preferably at least 95 mol%.

The monomers a) typically comprise polymerization inhibitors, preferably hydroquinone monoethers, as storage stabilizers.

The monomer solution comprises preferably up to 250 ppm by weight, preferably at most 130 ppm by weight, more preferably at most 70 ppm by weight, and preferably at least 10 ppm by weight, more preferably at least 30 ppm by weight and especially around 50 ppm by weight, of hydroquinone monoether, based in each case on the unneutralized monomer a). For example, the monomer solution can be prepared by using an ethylenically unsaturated monomer bearing acid groups with an appropriate content of hydroquinone monoether.

Preferred hydroquinone monoethers are hydroquinone monomethyl ether (MEHQ) and/or alpha-tocopherol (vitamin E).

Suitable crosslinkers b) are compounds having at least two groups suitable for crosslinking. Such groups are, for example, ethylenically unsaturated groups which can be polymerized free-radically into the polymer chain, and functional groups which can form covalent bonds with the acid groups of the monomer a). In addition, polyvalent metal salts which can form coordinate bonds with at least two acid groups of the monomer a) are also suitable as crosslinkers b).

Crosslinkers b) are preferably compounds having at least two polymerizable groups which can be polymerized free-radically into the polymer network. Suitable crosslinkers b) are, for example, ethylene glycol dimethacrylate, diethylene glycol diacrylate, polyethylene glycol diacrylate, allyl methacrylate, trimethylolpropane triacrylate, triallylamine, tetraallylammonium chloride, tetraallyloxyethane, as described in EP 0 530 438 A1, di- and triacrylates, as described in EP 0 547 847 A1, EP 0 559 476 A1, EP 0 632 068 A1, WO 93/21237 A1, WO 2003/104299 A1, WO 2003/104300 A1, WO 2003/104301 A1 and DE 103 31 450 A1, mixed acrylates which, as well as acrylate groups, comprise further ethylenically unsaturated groups, as described in DE 103 31 456 A1 and DE 103 55 401 A1, or crosslinker mixtures, as described, for example, in DE 195 43 368 A1, DE 196 46 484 A1, WO 90/15830 A1 and WO 2002/032962 A2.

Preferred crosslinkers b) are pentaerythrityl triallyl ether, tetraallyloxyethane, methylenebismethacrylamide, 15-tuply ethoxylated trimethylolpropane triacrylate, polyethylene glycol diacrylate, trimethylolpropane triacrylate and triallylamine.

Very particularly preferred crosslinkers b) are the polyethoxylated and/or -propoxylated glycerols which have been esterified with acrylic acid or methacrylic acid to give di- or triacrylates, as described, for example, in WO 2003/104301 A1. Di- and/or triacrylates of 3- to 10-tuply ethoxylated glycerol are particularly advantageous. Very particular preference is given to di- or triacrylates of 1- to 5-tuply ethoxylated and/or propoxylated glycerol. Most preferred are the triacrylates of 3- to 5-tuply ethoxylated and/or propoxylated glycerol, especially the triacrylate of 3-tuply ethoxylated glycerol.

The amount of crosslinker b) is preferably 0.05 to 1.5% by weight, more preferably 0.1 to 1 % by weight and most preferably 0.3 to 0.6% by weight, based in each case on monomer a). With rising crosslinker content, the centrifuge retention capacity (CRC) falls and the absorption under a pressure of 21.0 g/cm$^2$ passes through a maximum.

The initiators c) used may be all compounds which generate free radicals under the polymerization conditions, for example thermal initiators, redox initiators, photoinitiators. Suitable redox initiators are sodium peroxodisulfate/ascorbic acid, hydrogen peroxide/ascorbic acid, sodium peroxodisulfate/sodium bisulfite and hydrogen peroxide/sodium bisulfite. Preference is given to using mixtures of thermal initiators and redox initiators, such as sodium peroxodisulfate/hydrogen peroxide/ascorbic acid. However, the reducing component used is preferably disodium 2-hydroxy-2-sulfonatoacetate or a mixture of disodium 2-hydroxy-2-sulfinatoacetate, disodium 2-hydroxy-2-sulfonatoacetate and sodium bisulfite. Such mixtures are obtainable as Brüggolite® FF6 and Brüggolite® FF7 (Brüggemann Chemicals; Heilbronn; Germany).

Ethylenically unsaturated monomers d) copolymerizable with the ethylenically unsaturated monomers a) bearing acid groups are, for example, acrylamide, methacrylamide, hydroxyethyl acrylate, hydroxyethyl methacrylate, dimethylaminoethyl methacrylate, dimethylaminoethyl acrylate, dimethylaminopropyl acrylate, diethylaminopropyl acrylate, dimethylaminoethyl methacrylate, diethylaminoethyl methacrylate.

The water-soluble polymers e) used may be polyvinyl alcohol, polyvinylpyrrolidone, starch, starch derivatives, modified cellulose, such as methylcellulose or hydroxyethylcellulose, gelatin, polyglycols or polyacrylic acids, preferably starch, starch derivatives and modified cellulose.

Typically, an aqueous monomer solution is used. The water content of the monomer solution is preferably from 40 to 75% by weight, more preferably from 45 to 70% by weight and most preferably from 50 to 65% by weight. It is also possible to use monomer suspensions, i.e. monomer solutions with excess monomer a), for example sodium acrylate. With rising water content, the energy requirement in the subsequent drying rises, and, with falling water content, the heat of polymerization can only be removed inadequately.

For optimal action, the preferred polymerization inhibitors require dissolved oxygen. The monomer solution can therefore be freed of dissolved oxygen before the polymerization by inertization, i.e. flowing an inert gas through, preferably nitrogen or carbon dioxide. The oxygen content of the monomer solution is preferably lowered before the polymerization to less than 1 ppm by weight, more preferably to less than 0.5 ppm by weight, most preferably to less than 0.1 ppm by weight.

For better control of the polymerization reaction, it is optionally possible to add all known chelating agents to the monomer solution or suspension or to the raw materials thereof. Suitable chelating agents are, for example, phosphoric acid, diphosphoric acid, triphosphoric acid, polyphosphoric acid, citric acid, tartaric acid, or salts thereof.

Further suitable examples are iminodiacetic acid, hydroxyethyliminodiacetic acid, nitrilotriacetic acid, nitrilotripropionic acid, ethylenediaminetetraacetic acid, diethylenetriaminepentaacetic acid, triethylenetetraaminehexaacetic acid, N,N-bis(2-hydroxyethyl)glycine and trans-1,2-diaminocyclohexanetetraacetic acid, and salts thereof. The amount used is typically 1 to 30 000 ppm based on the monomers a), preferably 10 to 1000 ppm, preferentially 20 to 600 ppm, more preferably 50 to 400 ppm, most preferably 100 to 300 ppm.

The monomer solution or suspension is polymerized. Suitable reactors are, for example, kneading reactors or belt reactors. In the kneader, the polymer gel formed in the polymerization of an aqueous monomer solution or suspension is comminuted continuously by, for example, contrarotatory stirrer shafts, as described in WO 2001/038402 A1. Polymerization on the belt is described, for example, in DE 38 25 366 A1 and US 6,241,928. Polymerization in a belt reactor forms a polymer gel which has to be comminuted in a further process step, for example in an extruder or kneader.

To improve the drying properties, the comminuted polymer gel obtained by means of a kneader can additionally be extruded.

The acid groups of the resulting polymer gels have typically been partially neutralized. Neutralization is preferably carried out at the monomer stage. This is typically accomplished by mixing in the neutralizing agent as a solid or preferably as an aqueous solution. The degree of neutralization is preferably from 50 to 90 mol%, more preferably from 60 to 85 mol% and most preferably from 65 to 80 mol%, for which the customary neutralizing agents can be used, preferably alkali metal hydroxides, alkali metal oxides, alkali metal carbonates or alkali metal hydrogencarbonates and also mixtures thereof. Instead of alkali metal salts, it is also possible to use ammonium salts. Particularly preferred alkali metals are sodium and potassium, but very particular preference is given to sodium hydroxide, sodium carbonate or sodium hydrogencarbonate and also mixtures thereof.

However, it is also possible to carry out neutralization after the polymerization, at the stage of the polymer gel formed in the polymerization. It is also possible to neutralize up to 40 mol%, preferably from 10 to 30 mol% and more preferably from 15 to 25 mol% of the acid groups before the polymerization by adding a portion of the neutralizing agent actually to the monomer solution and setting the desired final degree of neutralization only after the polymerization, at the polymer gel stage. When the polymer gel is neutralized at least partly after the polymerization, the polymer gel is preferably comminuted mechanically, for example by means of an extruder, in which case the neutralizing agent can be sprayed, sprinkled or poured on and then carefully mixed in. To this end, the gel mass obtained can be repeatedly extruded for homogenization.

The resulting polymer gel is dried. The driers are not subject to any restriction. However, the drying of the polymer gel is preferably performed with a belt drier until the residual moisture content is preferably 0.5 to 10% by weight, more preferably 1 to 7% by weight and most preferably 2 to 5% by weight, the residual moisture content being determined by EDANA recommended test method No. WSP 230.2-05 "Mass Loss Upon Heating". In the case of a too high residual moisture content, the dried polymer gel has a too low glass transition temperature $T_g$ and can be processed further only with difficulty. In the case of a too low residual moisture content, the dried polymer gel is too brittle and, in the subsequent grinding steps, undesirably large amounts of polymer particles with an excessively low particle size are obtained ("fines"). The solids content of the gel before the drying is preferably from 25 to 90% by weight, more preferably from 35 to 70% by weight and most preferably from 40 to 60% by weight. However, a fluidized bed drier or a paddle drier may optionally also be used for drying purposes.

Subsequently, the dried polymer gel is ground and classified. The apparatus used for grinding may typically be single- or multistage roll mills, preferably two- or three-stage roll mills, pin mills, hammer mills or vibratory mills.

The mean particle size of the polymer particles removed as the product fraction is preferably at least 200 μm, more preferably from 250 to 600 μm and very particularly from 300 to 500 μm.

The mean particle size of the product fraction may be determined by means of EDANA recommended test method No. WSP 220.2-05 "Particle Size Distribution", where the proportions by mass of the screen fractions are plotted in cumulated form and the mean particle size is determined graphically. The mean particle size here is the value of the mesh size which gives rise to a cumulative 50% by weight.

The proportion of particles with a particle size of at least 150 μm is preferably at least 90% by weight, more preferably at least 95% by weight, most preferably at least 98% by weight.

Polymer particles with a too small particle size lower e.g. the saline flow conductivity (SFC). The proportion of excessively small polymer particles ("fines") should therefore be low.

Excessively small polymer particles are therefore typically removed and recycled into the process. This is preferably done before, during or immediately after the polymerization, i.e. before the drying of the polymer gel. The excessively small polymer particles can be moistened with water and/or aqueous surfactant before or during the recycling.

It is also possible to remove excessively small polymer particles in later process steps, for example after the surface postcrosslinking or another coating step. In this case, the excessively small polymer particles recycled are surface postcrosslinked or coated in another way, for example with fumed silica.

When a kneading reactor is used for polymerization, the excessively small polymer particles are preferably added during the last third of the polymerization.

When the excessively small polymer particles are added at a very early stage, for example actually to the monomer solution, this lowers the centrifuge retention capacity (CRC) of the resulting superabsorbent polymer particles. However, this can be compensated, for example, by adjusting the amount of crosslinker b) used.

The proportion of particles having a particle size of at most 850 μm is preferably at least 90% by weight, more preferably at least 95% by weight, most preferably at least 98% by weight.

The proportion of particles having a particle size of at most 600 μm is preferably at least 90% by weight, more preferably at least 95% by weight, most preferably at least 98% by weight.

Polymer particles of excessively large particle size lower the free swell rate. The proportion of excessively large polymer particles should therefore likewise be small.

Excessively large polymer particles are therefore typically removed and recycled into the grinding of the dried polymer gel.

To improve the properties, the polymer particles may subsequently be thermally surface postcrosslinked. Suitable surface postcrosslinkers are compounds which comprise groups which can form covalent bonds with at least two acid groups of the polymer particles. Suitable compounds are, for example, polyfunctional amines, polyfunctional amido amines, polyfunctional epoxides, as described in EP 0 083 022 A2, EP 0 543 303 A1 and EP 0 937 736 A2, di- or polyfunctional alcohols, as described in DE 33 14 019 A1, DE 35 23 617 A1 and EP 0 450 922 A2, or β-hydroxyalkylamides, as described in DE 102 04 938 A1 and US 6,239,230.

Additionally described as suitable surface postcrosslinkers are cyclic carbonates in DE 40 20 780 C1, 2-oxazolidinone and derivatives thereof, such as 2-hydroxyethyl-2-oxazolidinone, in DE 198 07 502 A1, bis- and poly-2-oxazolidinones in DE 198 07 992 C1, 2-oxotetrahydro-1,3-oxazine and derivatives thereof in DE 198 54 573 A1, N-acyl-2-oxazolidinones in DE 198 54 574 A1, cyclic ureas in DE 102 04 937 A1, bicyclic amide acetals in DE 103 34 584 A1, oxetanes and cyclic ureas in EP 1 199 327 A2 and morpholine-2,3-dione and derivatives thereof in WO 2003/031482 A1.

Preferred surface postcrosslinkers are ethylene carbonate, ethylene glycol diglycidyl ether, reaction products of polyamides with epichlorohydrin and mixtures of propylene glycol and 1,4-butanediol.

Very particularly preferred surface postcrosslinkers are 2-hydroxyethyloxazolidin-2-one, oxazolidin-2-one and 1,3-propanediol.

In addition, it is also possible to use surface postcrosslinkers which comprise additional polymerizable ethylenically unsaturated groups, as described in DE 37 13 601 A1.

The amount of surface postcrosslinker is preferably 0.001 to 2% by weight, more preferably 0.02 to 1% by weight and most preferably 0.05 to 0.2% by weight, based in each case on the polymer particles.

In a preferred embodiment, polyvalent cations are applied to the particle surface in addition to the surface postcrosslinkers before, during or after the surface postcrosslinking.

The polyvalent cations usable in the process are, for example, divalent cations such as the cations of zinc, magnesium, calcium, iron and strontium, trivalent cations such as the cations of aluminum, iron, chromium, rare earths and manganese, tetravalent cations such as the cations of titanium and zirconium. Possible counterions are chloride, bromide, sulfate, hydrogensulfate, carbonate, hydrogencarbonate, nitrate, phosphate, hydrogenphosphate, dihydrogenphosphate and carboxylate, such as acetate and lactate.

Aluminum sulfate and aluminum lactate are preferred. Apart from metal salts, it is also possible to use polyamines as polyvalent cations.

The amount of polyvalent cation used is, for example, 0.001 to 1.5% by weight, preferably 0.005 to 1% by weight and more preferably 0.02 to 0.8% by weight, based in each case on the polymer particles.

The surface postcrosslinking is typically performed in such a way that a solution of the surface postcrosslinker is sprayed onto the dried polymer particles. After the spray application, the polymer particles coated with surface postcrosslinker are dried thermally, and the surface postcrosslinking reaction can take place either before or during the drying.

The spray application of a solution of the surface postcrosslinker is preferably performed in mixers with moving mixing tools, such as screw mixers, disk mixers and paddle mixers. Particular preference is given to horizontal mixers such as paddle mixers, very particular preference to vertical mixers. The distinction between horizontal mixers and vertical mixers is made by the position of the mixing shaft, i.e. horizontal mixers have a horizontally mounted mixing shaft and vertical mixers a vertically mounted mixing shaft. Suitable mixers are, for example, horizontal Pflugschar® plowshare mixers (Gebr. Lödige Maschinenbau GmbH; Paderborn; Germany), Vrieco-Nauta continuous mixers (Hosokawa Micron BV; Doetinchem; the Netherlands), Processall Mixmill mixers (Processall Incorporated; Cincinnati; USA) and Schugi Flexomix® (Hosokawa Micron BV; Doetinchem; the Netherlands). However, it is also possible to spray on the surface postcrosslinker solution in a fluidized bed.

The surface postcrosslinkers are typically used in the form of an aqueous solution. The penetration depth of the surface postcrosslinker into the polymer particles can be adjusted via the content of nonaqueous solvent and total amount of solvent.

When exclusively water is used as the solvent, a surfactant is advantageously added. This improves the wetting behavior and reduces the tendency to form lumps. However, preference is given to using solvent mixtures, for example isopropanol/water, 1,3-propanediol/water and propylene glycol/water, where the mixing ratio in terms of mass is preferably from 20:80 to 40:60.

The thermal surface postcrosslinking is preferably performed in contact driers, more preferably paddle driers, most preferably disk driers. Suitable driers are, for example, Hosokawa Bepex® Horizontal Paddle Dryer (Hosokawa Micron GmbH; Leingarten; Germany), Hosokawa Bepex® Disc Dryer (Hosokawa Micron GmbH; Leingarten; Germany) and Nara Paddle Dryer (NARA Machinery Europe; Frechen; Germany). Moreover, fluidized bed driers may also be used.

The thermal surface postcrosslinking can be effected in the mixer itself, by heating the jacket or blowing in warm air. Equally suitable is a downstream drier, for example a shelf drier, a rotary tube oven or a heatable screw. It is particularly advantageous to effect mixing and drying in a fluidized bed drier.

Preferred surface postcrosslinking temperatures are in the range of 100 to 250°C, preferably 120 to 220°C, more preferably 130 to 210°C and most preferably 150 to 200°C. The preferred residence time at this temperature in the reaction mixer or drier is preferably at least 10 minutes, more preferably at least 20 minutes, most preferably at least 30 minutes, and typically at most 60 minutes.

Subsequently, the surface postcrosslinked polymer particles can be classified again, excessively small and/or excessively large polymer particles being removed and recycled into the process.

To further improve the properties, the surface postcrosslinked polymer particles can be coated or remoisturized.

The remoisturizing is preferably performed at 30 to 80°C, more preferably at 35 to 70°C, most preferably at 40 to 60°C. At excessively low temperatures, the superabsorbent polymer particles tend to form lumps, and, at higher temperatures, water already evaporates to a noticeable degree. The amount of water used for remoisturizing is preferably from 1 to 10% by weight, more preferably from 2 to 8% by weight and most preferably from 3 to 5% by weight. The remoisturizing increases the mechanical stability of the polymer particles and reduces their tendency to static charging.

Suitable coatings for improving the free swell rate and the saline flow conductivity (SFC) are, for example, inorganic inert substances, such as water-insoluble metal salts, organic polymers, cationic polymers and di- or polyvalent metal cations. Suitable coatings for dust binding are, for example, polyols. Suitable coatings for counteracting the undesired caking tendency of the polymer particles are, for example, fumed silica, such as Aerosil® 200, and surfactants, such as Span® 20.

The superabsorbent polymer particles produced by the process have a centrifuge retention capacity (CRC) of typically at least 15 g/g, preferably at least 20 g/g, more preferably at least 22 g/g, especially preferably at least 24 g/g and most preferably at least 26 g/g. The centrifuge retention capacity (CRC) of the superabsorbent polymer particles is typically less than 60 g/g. The centrifuge retention capacity (CRC) is determined by EDANA recommended test method No. WSP 241.2-05 "Fluid Retention Capacity in Saline, After Centrifugation".

The superabsorbent polymer particles produced by the process have an absorption under a pressure of 49.2 $g/cm^2$ of typically at least 15 g/g, preferably at least 20 g/g, more preferably at least 22 g/g, especially preferably at least 24 g/g and most preferably at least 26 g/g. The absorption under a pressure of 49.2 $g/cm^2$ of the superabsorbent polymer particles is typically less than 35 g/g. The absorption under a pressure of 49.2 $g/cm^2$ is determined analogously to EDANA recommended test method No. WSP 242.2-05 "Absorption under Pressure, Gravimetric Determination", except that a pressure of 49.2 $g/cm^2$ is established instead of a pressure of 21.0 $g/cm^2$.

Example

By continuously mixing deionized water, 50% by weight sodium hydroxide solution and acrylic acid, an acrylic acid/sodium acrylate solution was prepared, such that the degree of neutralization corresponds to 71.3 mol%. The solids content of the monomer solution was 38.8% by weight.

The polyethylenically unsaturated crosslinker used was polyethylene glycol-400 diacrylate (diacrylate proceeding from a polyethylene glycol with a mean molar mass of 400 g/mol). The amount used was 2 kg of crosslinker per t of monomer solution.

To initiate the free-radical polymerization, 1.03 kg of a 0.25% by weight aqueous hydrogen peroxide solution, 3.10 kg of a 15% by weight aqueous sodium peroxodisulfate solution and 1.05 kg of a 1% by weight aqueous ascorbic acid solution were used per t of monomer solution. The throughput of the monomer solution was 20 t/h. The reaction solution had a temperature of 23.5°C at the feed.

The individual components were metered in the following amounts continuously into a List Contikneter continuous kneader reactor with a volume of 6.3 m$^3$ (LIST AG, Arisdorf, Switzerland):

| | |
|---|---|
| 20 t/h | of monomer solution |
| 40 kg/h | of polyethylene glycol-400 diacrylate |
| 82.6 kg/h | of hydrogen peroxide solution/sodium peroxodisulfate solution |
| 21 kg/h | of ascorbic acid solution |

Between the addition point for the crosslinker and the addition sites for the initiators, the monomer solution was inertized with nitrogen.

After approx. 50% of the residence time, a metered addition of fines (1000 kg/h), which were obtained from the production process by grinding and screening, to the reactor additionally took place. The residence time of the reaction mixture in the reactor was 15 minutes.

The resulting polymer gel was placed onto a belt dryer. On the belt dryer, an air/gas mixture flowed continuously around the polymer gel and dried it. The residence time in the belt dryer was 37 minutes.

The dried polymer gel was ground and screened off to a particle size fraction of 150 to 850 $\mu$m. The resulting base polymer was surface postcrosslinked.

In a Schugi Flexomix® (Hosokawa Micron B.V., Doetinchem, the Netherlands), the base polymer was coated with a surface postcrosslinker solution and then dried in a NARA paddle dryer (GMF Gouda, Waddinxveen, the Netherlands) at 190°C for 45 minutes. The paddle dryer was heated with steam having a pressure of 24bar (220°C).

The following amounts were metered into the Schugi Flexomix®:

| | |
|---|---|
| 7.5 t/h | of base polymer |
| 270.0 kg/h | of surface postcrosslinker solution |

The surface postcrosslinker solution comprised 2.8% by weight of 2-hydroxyethyl-2 oxazolidone, 2.8% by weight of aluminum sulfate, 66.1% by weight of deionized water and 28.3% by weight of isopropanol.

After being dried, the surface postcrosslinked base polymer was cooled to approx. 60°C in a NARA paddle cooler (GMF Gouda, Waddinxveen, the Netherlands).

The resulting superabsorbent polymer particles had a centrifuge retention capacity (CRC) of 28.4 g/g.

The superabsorbent polymer particles were stored in a silo having a cone angle of 30° from the vertical and an internal volume of 220 m$^3$. The superabsorbentic particles inside the silo had a temperature of 45°C.

The superabsorbent polymer particles are discharged out of the silo into big bags. The filling level of the silo at the end of the filling of every big bag was marked on the big bag for a period of 48 hours. Samples out of the big bags were analyzed. The results are shown in the following table 1. The listed data are average values of big bags, wherein the filling level of the silo at the end of the filling of the big bags was in the same range.

Tab. 1: particle size distribution of the samples

| Example | 1 | 2 | 3 | 4 | 5 | 6 | 7 | 8 |
|---|---|---|---|---|---|---|---|---|
| Filling level of the silo | 80-90% | 70-80% | 60-70% | 50-60% | 40-50% | 30-40% | 20-30% | 10-20% |
| >150$\mu$m | 0,2 | 0,2 | 0,2 | 0,1 | 0,1 | 0,1 | 0,2 | 0,5 |
| 150-300$\mu$m | 12,0 | 12,7 | 11,4 | 9,3 | 10,0 | 9,5 | 9,8 | 18,9 |

(continued)

| Example | 1 | 2 | 3 | 4 | 5 | 6 | 7 | 8 |
|---|---|---|---|---|---|---|---|---|
| 300-600$\mu$m | 51,5 | 52,3 | 52,0 | 51,5 | 51,8 | 50,2 | 45,2 | 42,3 |
| 600-850$\mu$m | 36,2 | 34,8 | 36,4 | 38,9 | 38,1 | 40,2 | 44,5 | 38,2 |
| >850$\mu$m | 0,3 | 0,3 | 0,3 | 0,4 | 0,4 | 0,3 | 0,4 | 0,2 |
| Big bags | 14 | 37 | 59 | 80 | 59 | 58 | 8 | 5 |

**Claims**

1.  A filling process for superabsorbent polymer particles, wherein the superabsorbent polymer particles are discharged out of a silo into n bulk container, n is an integer, the sum of the filled volumes of the n bulk container correspondents to more than 80% of the effective volume of the silo and the filling level of the silo during the total time of filling of the n bulk container is not less than 20%,
    wherein the filling level of the silo is the filled volume in the silo divided by the effective volume of the silo, and wherein the effective volume is the maximum volume of the silo that can be used for storing superabsorbent polymer particles.

2.  The process according to claim 1, wherein the sum of filled volumes of the n bulk container correspondents to more than 85% of the effective volume of the silo and the filling level of the silo during filling of the n bulk container is not less than 30%.

3.  The process according to claim 1, wherein the sum of filled volumes of the n bulk container correspondents to more than 90% of the effective volume of the silo and the filling level of the silo during filling of the n bulk container is not less than 40%.

4.  The process according to claim 1, wherein the sum of filled volumes of the n bulk container correspondents to more than 95% of the effective volume of the silo and the filling level of the silo during filling of the n bulk container is not less than 50%.

5.  The process according to any of claims 1 to 4, wherein the cone angle of the silo is smaller than 30° from the vertical.

6.  The process according to any of claims 1 to 5, wherein the effective volume of the silo is at least 100 m$^3$.

7.  The process according to any of claims 1 to 6, wherein the effective volume of the silo is at least 300 m$^3$.

8.  The process according to any of claims 1 to 7, wherein the effective volume of the silo is at least 500 m$^3$.

9.  The process according to any of claims 1 to 8, wherein the silo is thermally insulated and/or external heated.

10. The process according to any of claims 1 to 9, wherein the temperature of the superabsorbent particle inside the silo is from 40 to 60°C.

11. The process according to any of claims 1 to 10, wherein the moisture content of the superabsorbent particle inside the silo is from 0.5 to 5% by weight.

12. The process according to any of claims 1 to 11, wherein the silo is connected with a vent line.

13. The process according to any of claims 1 to 12, wherein the superabsorbent polymer particles in the silo are covered with dry air.

14. The process according to any of claims 1 to 13, wherein the superabsorbent polymer particles have a centrifuge retention capacity of at least 15 g/g, wherein the centrifuge retention capacity of the superabsorbent polymer particles is determined by EDANA recommended test method No. WSP 241.2-05 "Fluid Retention Capacity in Saline, After Centrifugation".

**15.** The process according to any of claims 1 to 14, wherein the bulk container is a flexible intermediate bulk container.

**Patentansprüche**

**1.** Füllverfahren für superabsorbierende Polymerpartikel, wobei die superabsorbierenden Polymerpartikel aus einem Silo in n Schüttgutbehälter ausgegeben werden, n eine ganze Zahl ist, die Summe der gefüllten Volumen der n Schüttgutbehälter mehr als 80 % des effektiven Volumens des Silos entspricht und der Füllstand des Silos während der Gesamtdauer des Füllens der n Schüttgutbehälter nicht weniger als 20 % beträgt, wobei der Füllstand des Silos das gefüllte Volumen in dem Silo geteilt durch das effektive Volumen des Silos ist und wobei das effektive Volumen das maximale Volumen des Silos ist, das zum Lagern von superabsorbierenden Polymerpartikeln verwendet werden kann.

**2.** Verfahren gemäß Anspruch 1, wobei die Summe der gefüllten Volumen der n Schüttgutbehälter mehr als 85 % des effektiven Volumens des Silos entspricht und der Füllstand des Silos während des Füllens der n Schüttgutbehälter nicht weniger als 30 % beträgt.

**3.** Verfahren gemäß Anspruch 1, wobei die Summe der gefüllten Volumen der n Schüttgutbehälter mehr als 90 % des effektiven Volumens des Silos entspricht und der Füllstand des Silos während des Füllens der n Schüttgutbehälter nicht weniger als 40 % beträgt.

**4.** Verfahren gemäß Anspruch 1, wobei die Summe der gefüllten Volumen der n Schüttgutbehälter mehr als 95 % des effektiven Volumens des Silos entspricht und der Füllstand des Silos während des Füllens der n Schüttgutbehälter nicht weniger als 50 % beträgt.

**5.** Verfahren gemäß einem der Ansprüche 1 bis 4, wobei der Kegelwinkel des Silos kleiner als 30° von der Vertikale ist.

**6.** Verfahren gemäß einem der Ansprüche 1 bis 5, wobei das effektive Volumen des Silos wenigstens 100 $m^3$ beträgt.

**7.** Verfahren gemäß einem der Ansprüche 1 bis 6, wobei das effektive Volumen des Silos wenigstens 300 $m^3$ beträgt.

**8.** Verfahren gemäß einem der Ansprüche 1 bis 7, wobei das effektive Volumen des Silos wenigstens 500 $m^3$ beträgt.

**9.** Verfahren gemäß einem der Ansprüche 1 bis 8, wobei der Silo wärmeisoliert und/oder extern beheizt ist.

**10.** Verfahren gemäß einem der Ansprüche 1 bis 9, wobei die Temperatur des superabsorbierenden Partikels in dem Silo von 40 bis 60 °C beträgt.

**11.** Verfahren gemäß einem der Ansprüche 1 bis 10, wobei der Feuchtegehalt des superabsorbierenden Partikels in dem Silo von 0,5 bis 5 Gew.-% beträgt.

**12.** Verfahren gemäß einem der Ansprüche 1 bis 11, wobei der Silo mit einer Lüftungsleitung verbunden ist.

**13.** Verfahren gemäß einem der Ansprüche 1 bis 12, wobei die superabsorbierenden Polymerpartikel in dem Silo mit trockener Luft bedeckt sind.

**14.** Verfahren gemäß einem der Ansprüche 1 bis 13, wobei die superabsorbierenden Polymerpartikel eine Zentrifugenretentionskapazität von wenigstens 15 g/g aufweisen, wobei die Zentrifugenretentionskapazität der superabsorbierenden Polymerpartikel durch das EDANAempfohlene Prüfverfahren Nr. WSP 241.2-05 "Fluid Retention Capacity in Saline, After Centrifugation" bestimmt wird.

**15.** Verfahren gemäß einem der Ansprüche 1 bis 14, wobei der Schüttgutbehälter ein flexibler Schüttgut-Zwischenbehälter ist.

**Revendications**

**1.** Procédé de remplissage pour des particules de polymère superabsorbant, dans lequel les particules de polymère superabsorbant sont déchargées d'un silo dans n conteneurs en vrac, n est un entier, la somme des volumes remplis du conteneur en vrac n correspond à plus de 80 % du volume effectif du silo et le niveau de remplissage du silo pendant la durée totale de remplissage du conteneur en vrac n n'est pas inférieure à 20 %, dans lequel le niveau de remplissage du silo est le volume rempli dans le silo divisé par le volume effectif du silo, et dans lequel le volume effectif est le volume maximum du silo qui peut être utilisé pour stocker des particules de polymère superabsorbant.

2. Procédé selon la revendication 1, dans lequel la somme des volumes remplis du conteneur en vrac n correspond à plus de 85 % du volume effectif du silo et le niveau de remplissage du silo pendant le remplissage du conteneur en vrac n n'est pas inférieur à 30 %.

3. Procédé selon la revendication 1, dans lequel la somme des volumes remplis des n conteneurs en vrac correspond à plus de 90 % du volume effectif du silo et le niveau de remplissage du silo pendant le remplissage du conteneur en vrac n n'est pas inférieur à 40 %.

4. Procédé selon la revendication 1, dans lequel la somme des volumes remplis des n conteneurs en vrac correspond à plus de 95 % du volume effectif du silo et le niveau de remplissage du silo pendant le remplissage du conteneur en vrac n n'est pas inférieur à 50 %.

5. Procédé selon l'une quelconque des revendications 1 à 4, dans lequel l'angle du cône du silo est inférieur à 30° par rapport à la verticale.

6. Procédé selon l'une quelconque des revendications 1 à 5, dans lequel le volume effectif du silo est d'au moins 100 m$^3$.

7. Procédé selon l'une quelconque des revendications 1 à 6, dans lequel le volume effectif du silo est d'au moins 300 m$^3$.

8. Procédé selon l'une quelconque des revendications 1 à 7, dans lequel le volume effectif du silo est d'au moins 500 m$^3$.

9. Procédé selon l'une quelconque des revendications 1 à 8, dans lequel le silo est isolé thermiquement et/ou chauffé de l'extérieur.

10. Procédé selon l'une quelconque des revendications 1 à 9, dans lequel la température de la particule super-absorbante à l'intérieur du silo est de 40 à 60 °C.

11. Procédé selon l'une quelconque des revendications 1 à 10, dans lequel la teneur en humidité de la particule super-absorbante à l'intérieur du silo est comprise de 0,5 à 5 % en poids.

12. Procédé selon l'une quelconque des revendications 1 à 11, dans lequel le silo est connecté à une conduite d'évent.

13. Procédé selon l'une quelconque des revendications 1 à 12, dans lequel les particules de polymère superabsorbant dans le silo sont recouvertes d'air sec.

14. Procédé selon l'une quelconque des revendications 1 à 13, dans lequel les particules de polymère superabsorbant ont une capacité de rétention centrifuge d'au moins 15 g/g, dans lequel la capacité de rétention centrifuge des particules du polymère superabsorbant est déterminée par le procédé de test recommandé par l'EDANA n° WSP 241.2-05 « Capacité de rétention de fluide en solution saline, après centrifugation ».

15. Procédé selon l'une quelconque des revendications 1 à 14, dans lequel le conteneur en vrac est un conteneur en vrac intermédiaire flexible.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1118633 A2
- EP 2253563 A1
- EP 2263939 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- WO 2001038402 A1
- DE 3825366 A1
- US 6241928 B
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 2003031482 A1
- DE 3713601 A1

**Non-patent literature cited in the description**

- **F.L. BUCHHOLZ ; A.T. GRAHAM.** Modern Superabsorbent Polymer Technology. Wiley-VCH, 1998, 71-103
- **N. ENGBLOM.** Segregation of powder mixtures in silos with particular reference to dry mineral-based construction materials. *University of Helsinki,* 2012